# EUROPEAN PATENT SPECIFICATION

(11) **EP 1 019 818 B1**
(45) Date of publication and mention of the grant of the patent: **15.01.2003**
(21) Application number: 98951943.4
(22) Date of filing: 24.09.1998
(51) Int. Cl.: G06F 11/00

(54) **AUTOMATED VALIDATION AND VERIFICATION OF COMPUTER SOFTWARE**
AUTOMATISIERTE GÜLTIGKEITSBESTÄTIGUNG UND RICHTIGKEITSPRÜFUNG VON RECHNERSOFTWARE
VALIDATION ET VERIFICATION AUTOMATISEES DE LOGICIELS D'ORDINATEUR

(30) Priority: 29.09.1997 US 939419
(43) Date of publication of application: 19.07.2000
(73) Proprietor: Honeywell Inc., Minneapolis Minnesota 55440-0524 (US)
(72) Inventor: GOOSSEN, Emray, R., Albuquerque, NM 87123 (US); SHEMA, David, K., Cedar Rapids, IO 52403 (US); LIPPITT, Carl, Albuquerque, NM 87111 (US)
(74) Representative: W.P. THOMPSON & CO.
(86) International application number: PCT/US98/20104
(87) International publication number: WO 99/017199

(56) References cited:
- EP-A- 0 703 532
- US-A- 4 853 851
- "CODE COVERAGE MAPPER WITH BRANCH ANALYSIS FOR AN INTEL 8088 MICRO-PROCESSOR IN MAXIMUM MODE" IBM TECHNICAL DISCLOSURE BULLETIN, vol. 29, no. 2, July 1986, page 544/545 XP000715450 US

## Description

### FIELD OF THE INVENTION

This invention relates to automated validation and verification of computer software.

### BACKGROUND OF THE INVENTION

In the past, the control surfaces of aircraft were controlled through a direct mechanical connection between the pilot and the control services. This control was either provided by cables and pulleys or though various hydraulic systems. More and more often, modem aircraft are being operated through computer-assisted systems. In a fly-by-wire system, the pilot movements of the control instruments such as the foot pedal or yolk are translated into an electrical signal which are then transmitted to electric actuators which move the control services. These black boxes which convert movements into electrical signals have software which is critical to the safety of the aircraft.

In order to be sure that these new computer systems operate properly on an aircraft, the Federal Aviation Administration (FAA) requires that all software used in a critical system be FAA certified. For FAA certification, software is developed and tested according to one of five levels: A, B, C, D, or E. Levels D and E require very little analysis and do not require much in order to show compliance. Level C certification is slightly more difficult. At this level of development, software must be traceable to the requirements and test procedures, and the test results must be correlated to the system requirements. This level is mostly concerned with the process of software development.

Level B certification requires that a demonstration of software and implementation be provided such that it can be shown that there is no dead code (unreachable or unexecutable during the test process), in the system. The dead code check is performed from a source code perspective and the test results need to show that each source line of executable code was reached during the test.

Level A certification builds upon level B and places additional requirements on the path coverage testing of the software to be performed in an embedded computer system. Where level B testing only needs to show that every source line was executed and every logic path taken, level A testing must certify that every machine instruction in the object code is executed. In addition, it must be shown that every logic path decision through the software has been exercised exhaustively during the test.

The difference between level B and level A testing is most apparent in the following example:
001 - IF (A. and. B). OR) (C.and. D))
002 - THEN set E to X
003 - set E to Y

For level B testing, it is necessary to show two results: ) that lines 001, 002, and 003 are executed, and 2) that lines 001 and 003 were executed while 002 was not. For level A testing it is necessary to show that each of the possible combinations that would make the conditional of line 001 true or false. Level B testing may be performed on the source code level. Level A must be performed on the machine code level.

Since each source line of executable code is translated into one or more machine instructions by the compiler and linker, a run-time tool that could verify that each machine instruction conditional branch at least once branch and at least once did not branch will go a long way towards automating the level A certification testing.

Currently, level A testing is performed on aircraft-critical computer software by people comparing the results of a test run of the computer program which documents each line of code that was executed, with a link map which is generated at the time the source code is compiled. The person analyzing the code must first determine that every line of code was executed, and that each branch was both at one point taken and then not taken. Because of the amount of time it takes an individual or group of individuals to analyze computer code, especially when an aircraft system is becoming more voluminous and sophisticated, it would be a great advantage to automate this process.

In the IBM technical Disclosure Bulletin, Vol 29, No. 2, P544-545 there is disclosed an apparatus and method for ascertaining instructions (of computer software) that have not been executed and conditional branch of instructions that have not been executed both ways (p. 544, par.1), i.e. verifying computer software execution path and decision path; means to execute compiled computer software (it is an Intel 8088 microprocessor, see p. 544, par. 1); means to monitor the execution of the computer software (2-7) and to generate an execution record map with first (5) and second (6) fields, where the first field contains an indicator of all instruction addresses for execution of the computer software where a branch is not taken, and the second field contains an indicator of all the instruction addresses for execution of the computer software where a branch is taken (see p. 545, par. 1 to 3); means to determine whether all lines of code in the software code have been executed, and whether all the branches in the computer software have been taken at least once and not taken at least once (see o. 544, par. 1 and 2), using the first and second fields of the execution record map (see p. 545, par. 5).

### SUMMARY OF THE INVENTION

In one aspect the present invention discloses an apparatus for automatic validation and verification of computer software execution path and decision path, the apparatus comprising: means to monitor the execution of the computer software executing within the processor, and to generate a execution record map with first and second fields, where the first field contains an indicator of all instruction addresses in the computer software where a branch is not taken, and the second field contains an indicator of all the instruction addresses in the computer software where a branch is taken; means to compile the computer software; means to generate a link map for the computer software which link map includes a listing of all of lines of code in the computer software as well as links for all branches which are part of the computer software; a processor the compiled computer software so that all. functions of the computer software are executed; means to compare the link map with the first and second fields of the execution record map to determine whether all lines of code in the computer software have been executed, and whether all the branches on the computer software have been taken at least once and not been taken at least once; and means to generate a test report which indicates which of the lines and the branches of the computer software have not been taken.

In another aspect the invention provides a method for automated validation and verification of computer software executing path and decision path comprising the steps of: compiling the computer software and generating a link map which link map includes a listing of all of lines of code in the computer software as well as links for all branches which are part of the computer software; executing the computer software in a processor such that all functions of the computer software are executed; monitoring the execution of the computer software in the processor of all lines if code in the computer software, and generating an execution record map with first and second fields, where the first field contains an indicator of all instructions addresses in the computer software where a branch is not taken, and the second field contains an indicator of all the instruction addresses in the computer software where a branch is taken; comparing the link map with the first and second fields of the execution record map to determine that all lines of the computer software are executed, and to identify particular lines and branches of the computer software which were not executed; and generating test coverage report which lists all the lines and branches of the computer software which were not executed.

### BRIEF DESCRIPTION OF THE DRAWINGS

Figure 1 discloses a block diagram of the automated validation and verification of computer software system.
Figure 2 discloses a flow chart of the monitoring of the software execution.
Figure 3 discloses a flow chart of the comparison of the branch taken and branch not taken address maps with the link map.

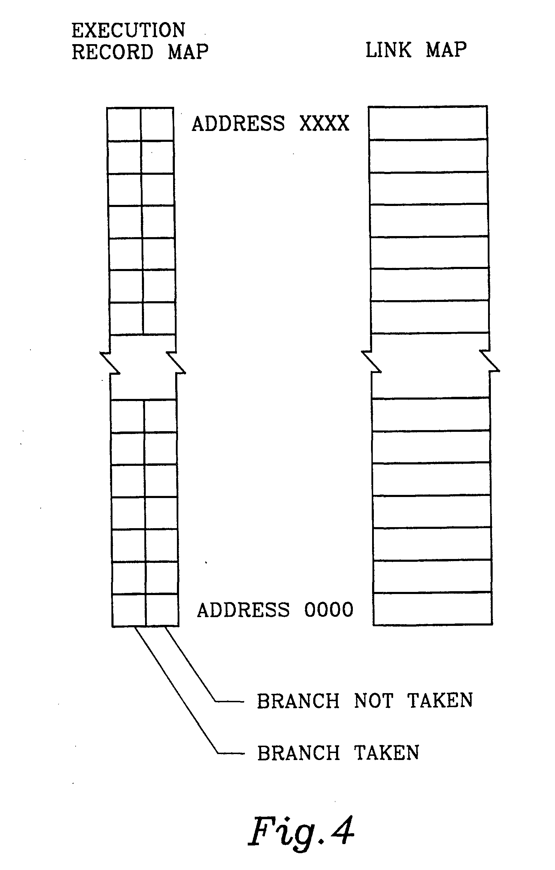

Figure 4 discloses the execution record map created by the monitoring apparatus which is compared to the link map by the coverage analysis apparatus.

### DESCRIPTION OF THE PREFERRED EMBODIMENTS

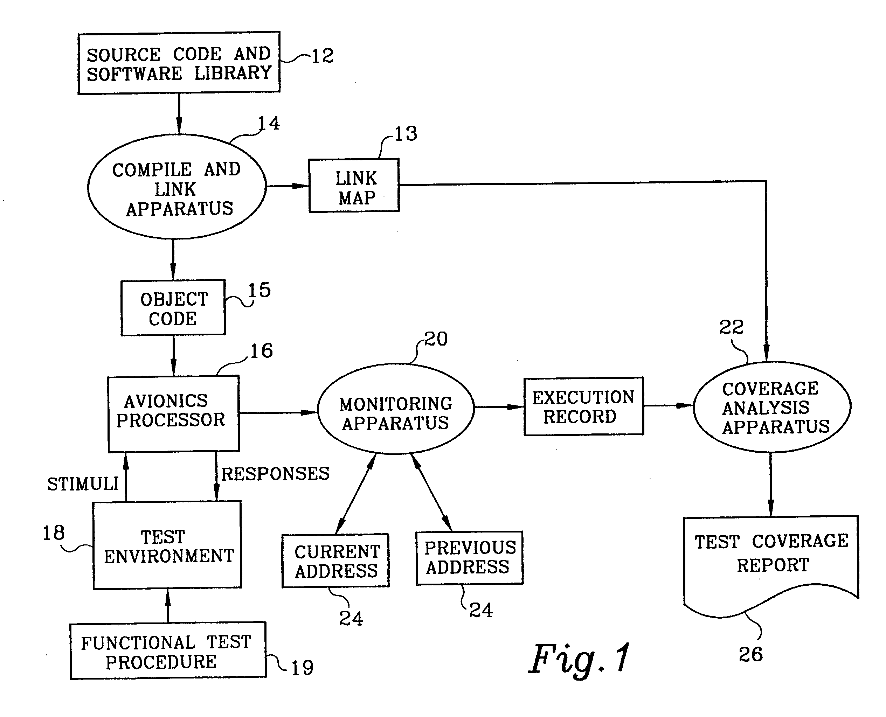

Disclosed in Figure 1 is a block diagram showing the system configuration for the automated validation and verification of software apparatus. Software which is to be tested is initially stored in a source code and software library 12. This source code is retrieved from the source code and software library 12 by the compile link apparatus 14. This apparatus compiles the source code and outputs object code to the avionics processor 16 while also generating a link map which provides a listing of all of the lines of code in the software as well as all the links for all loops which are part of the software.

The avionics processor 16 is the black box which is installed in an aircraft and provides the translation of the pilots' movements on the control sticks and instruments and translates these movements into electrical signals which are then provided to electronic actuators which then move the control services. One skilled in the art would realize that the use of the avionics processor in the present embodiment is merely the preferred embodiment; but however, any type of electronics which employ computer software can be tested in the present system.

Once the object code is embedded in the avionics processor 16, a test site environment 18 then runs the processor through all its design functions. The purpose of this test is to determine whether the processor can perform all the functions it is supposed to. During the testing of the avionics processor 16, the monitoring apparatus 20 tracks the execution of each line of code in the avionics processor and generates two separate types of address maps. One map is a branch taken address map and the other is a branch not taken address map. These maps list the instructions in which, when reading consecutive instructions executed whether lines of object code were executed elsewhere in the program or whether lines of object code were executed in consecutive order. The detailed operation of the monitoring apparatus will be described in greater detail below.

Both the branch taken address map and the branch not taken address map is then transmitted to the analysis apparatus 22. The analysis apparatus 22 also retrieves the link map originally generated by the compile link apparatus 14 and through a detailed comparison process with both the branch taken and branch not taken map provides a detailed analysis of how the object code was executed in the avionics processor.

The purpose of the present system is to provide both level A and level B testing of software as required under Federal Aviation Administration (FAA) regulations. Level B certification requires that a demonstration of the software implementation be provided such that it can be shown that there is no dead code (unreachable, or unexecuted during the test process) in the system. This dead code check is performed from a source code perspective and the test results need to show that each source line of executable code was reached during the test.

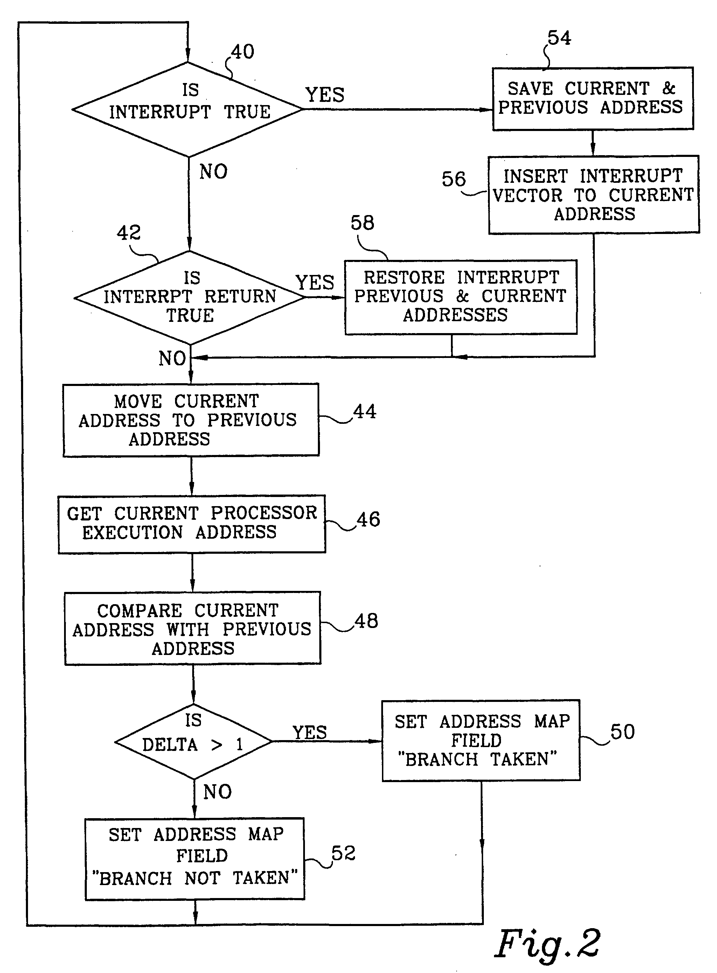

Level A certification builds upon level B and puts additional requirements on the paths coverage testing of the software to be performed on the embedded system. While Level B testing only needs to show that every source line was executed and every logic path taken, level A testing must verify that each machine instruction in the object code is executed. In addition, it must show that every logic path decision through the software has been exercised exhaustively during the test. This means that when executing instructions which require a decision as to whether to continue to the next instruction or go somewhere else in the program, it must be shown that both \choices were taken at least once. Figure 2 discloses a flow chart which describes the operation of the monitoring apparatus 20. As discussed above, the monitoring apparatus provides the branch taken and branch not taken address maps to be provided to the analysis apparatus 22. In operation, while the object code is being executed in the avionics processor 16, the monitoring apparatus 20 receives the address of each line of code that is executed at step 46. Once the address is received at step 46, this current address is stored in memory in step 54. The current address is also stored in an interrupt address handler in steps 54 and 56 which is used in the case the operation of the avionics processor 16 is interrupted (step 40) and the monitoring apparatus can then receive from the same spot (steps 42 and 58) once the avionics processor begins normal operations.

At step 40 an inquiry is made as to whether an interrupt signal has been received. If not, at step 44, the address of the previous instruction executed is retrieved from memory. At steps 48 and 49, a comparison of addresses is then made and the question is asked whether the current address is more than one greater than the previous address. An answer greater than one would indicate that the address instructions are not being executed consecutively and that the previous address was a decision instruction and that an instruction was executed which is remote from the previous instruction address.

At step 50 if the current address is greater than one more than the previous address, a branch taken bit is set for the previous address and then the previous instruction address is placed in the branch taken map. If the current address is not more than one greater than the previous address, then it is clear that a branch is not taken and the instructions were executed consecutively. At step 52, a bit is set for the previous address for branch not taken. At this point the instruction address is put in the branch not taken map. At this point, the completed branch taken map and branch not taken map are transmitted to the analysis apparatus 22.

The execution record map is a simple two field record table associated with each instruction memory location. The data in the branch is not taken and the branch taken fields represents a true or false condition.

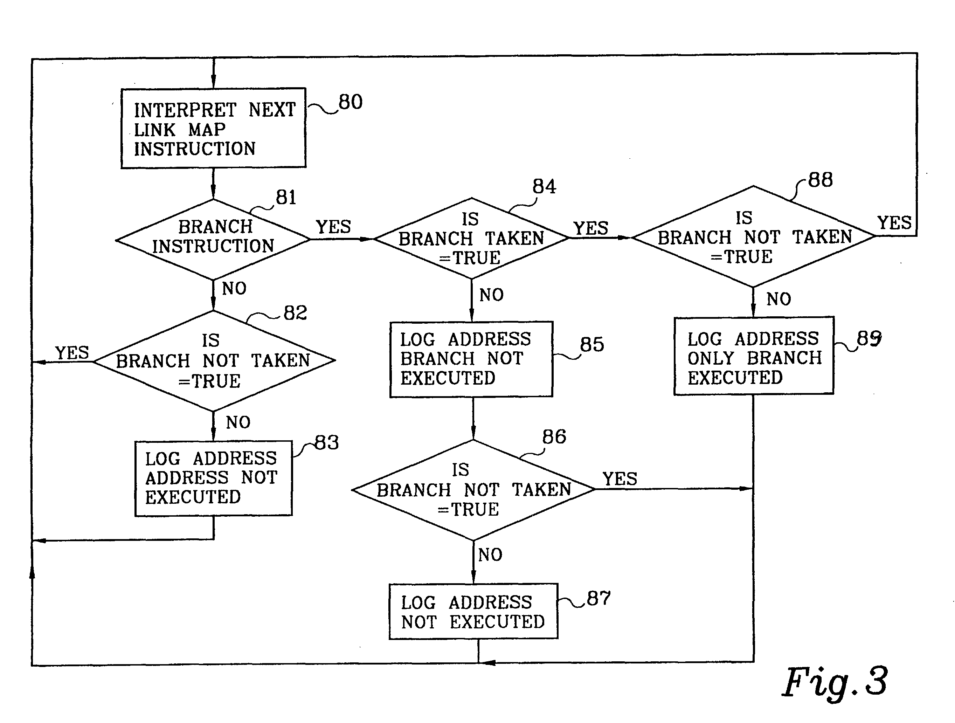

Figure 3 discloses a flow chart which describes the operation of the coverage analysis apparatus 22. The coverage analysis apparatus performs a post processing of the execution record map by comparing its content against the link map which was generated by the compile and link apparatus 14. The first instruction in the link map is interpreted at step 80. A query is then made at step 81 as to whether this line of code is a branch instruction. If it is not a branch instruction, at step 82 the execution record map branch not taken field is examined for this address. If the instruction is found (yes), then the instruction was executed during the test, and the coverage analysis process returns to step 80 and the next address in the link map is read. If the instruction is not found at step 82, this indicates that the instruction was not executed. At step 83 the fault is logged and the process returns to step 80 and the next address in the link map is read.

If at step 81 it is determined that the line of code is a branch taken instruction, then both of the execution record fields (branch taken, and branch not taken) must be examined. At step 84 a query is made. If the answer is yes at step 84, another query is made at step 88 as to whether the branch was not taken. If the answer is yes at step 88 the process returns to step 80 and the next address in the link map is read.

If at step 84 the answer is no, this means the branch instruction did not cause a branch to be taken and the address of the branch instruction is logged at step 85. The instruction is further analyzed at step 86 to determine if the branch not taken field is set to true. If the answer is no, the address of the instruction is logged at step 87. The process then returns to step 80 and the next address in the link map is read. If the answer is yes at step 86, it means that the branch was not taken at least once at that point. The process then returns to step 80 and the next address in the link map is read.

If at step 88, the branch taken field was true but the branch not taken field is false, indicating that only the branch was executed is logged at the next step 89. The process then returns to step 80 and the next address in the map is read.

## Claims

1. An apparatus for automatic validation and verification of computer software execution path and decision path, the apparatus comprising:
means to compile the computer software;
means to generate a link map for the computer software which link map includes a listing of all of lines of code in the computer software as well as links for all branches which are part of the computer software;
a processor to execute the compiled computer software so that all functions of the computer software are executed;
means to compare the link map with the first and second fields of the execution record map to determine whether all lines of code in the computer software have been executed, and whether all the branches in the computer software have been taken at least once and not been taken at least once; and
means to monitor the execution of the computer software executing within the processor, and to generate a execution record map with first and second fields, where the first field contains an indicator of all instruction addresses in the computer software where a branch is not taken, and the second field contains an indicator of all the instruction addresses in the computer software where a branch is taken;
means to generate a test report which indicates which of the lines and the branches of the computer software have not been taken.

2. An apparatus according to claim 1 further comprising means to store a current address of a current line of the computer software and a previous address of a previous line of the computer software, the computer software being the same computer software as used after validation and verification without being instrumented with other software.

3. The apparatus for automated validation and verification of computer executing path and decision path software of Claim 1 or 2 wherein the means to execute the computer software is a test fixture.

4. The apparatus for automated validation and verification of computer software executing path and decision path of Claim 1, 2 or 3 further including means to account for asynchronous interrupts during execution of the compiled computer software.

5. The apparatus of Claim 1, 2, 3 or 4 wherein the validation and verification of the computer software is performed during requirements based testing.

6. The apparatus of any one of the preceding claims wherein the validation and verification of the computer software execution path and decision path is performed at the machine code execution level.

7. The apparatus of any one of the preceding claims wherein the validation and verification of the computer execution path and decision path is performed at the machine code execution level.

8. The apparatus of any one of the preceding claims, wherein the means to compare the link map with the first and second fields compares the link map and the first and second fields post-processing to provide an analysis of the method in which the computer software was executed.

9. An apparatus according to any one of the preceding claims wherein the validation and verification of the computer software execution path and decision path is performed while the computer software is embedded in the means to execute the compiled software.

10. The apparatus of claim 9 wherein the means to execute the compiled software is an avionics processor.

11. A method for automated validation and verification of computer software executing path and decision path comprising the steps of:
compiling the computer software and generating a link map which link map includes a listing of all of lines of code in the computer software as well as links for all branches which are part of the computer software;
executing the computer software in a processor such that all functions of the computer software are executed;
monitoring the execution of the computer software in the processor of all lines if code in the computer software, and generating an execution record map with first and second fields, where the first field contains an indicator of all instructions addresses in the computer software where a branch is not taken, and the second field contains an indicator of all the instruction addresses in the computer software program where a branch is taken;
comparing the link map with the first and second fields of the execution record map to determine that all lines of the computer software are executed, and to identify particular lines and branches of the computer software which were not executed; and
generating test coverage report which lists all the lines and branches of the computer software which were not executed.

12. A method according to claim 11, wherein the test coverage report further provides an evaluation of the test coverage of potential execution paths and decision execution paths;
wherein the executing and monitoring steps comprise the step of comparing the current address of a current line of the computer software which is being executed with the previous address of a previous line of the computer software that was executed, and if the current instruction is more than one address greater or less than the previous address, the branch taken field is filled with the indicator, and if the current address is no more than one greater from the previous address, the branch not taken field is filled with the indicator; and
wherein the step of comparing the link map with execution record map includes determining whether each of the addresses in the link map is or is not a branch instruction, and if it is, determining that the branch instruction has both the branch taken and the branch not taken indicators, and if the address is not a branch instruction determining the execution record map contains the branch not taken indicator.

13. A method according to claim 11 wherein the computer software being validated and verified is the same computer software as used after validation and verification without being instrumented with other software and further comprising the step of storing a current address line of the computer software which is being executed in the processor and a previous address of a previous line of the computer software being executed in the process.

## Patentansprüche

1. Vorrichtung zur automatischen Validierung und Verifikation des Ausführungswegs und Entscheidungswegs von Computersoftware, umfassend:
ein Mittel zum Kompilieren der Computersoftware;
ein Mittel zum Erzeugen einer Link-Abbildung für die Computersoftware, wobei die Link-Abbildung eine Auflistung aller Codezeilen in der Computersoftware sowie der Links für alle Verzweigungen, die Teil der Computersoftware sind, enthält;
einen Prozessor zum Ausführen der kompilierten Computersoftware, so daß alle Funktionen der Computersoftware ausgeführt werden;
ein Mittel zum Vergleichen der Link-Abbildung mit dem ersten und dem zweiten Feld der Ausführungsaufzeichnungsabbildung, um zu bestimmen, ob alle Codezeilen in der Computersoftware ausgeführt wurden, und ob alle Verzweigungen in der Computersoftware mindestens einmal genommen und mindestens einmal nicht genommen wurden; und
ein Mittel zum Überwachen der Ausführung der Computersoftware, die in dem Prozessor ausgeführt wird, und zum Erzeugen einer Ausführungsaufzeichnungsabbildung mit einem ersten und einem zweiten Feld,
wobei das erste Feld einen Anzeiger aller Befehlsadressen in der Computersoftware enthält, an denen eine Verzweigung nicht genommen wird, und das zweite Feld einen Anzeiger aller Befehlsadressen in der Computersoftware enthält, an denen eine Verzweigung genommen wird;
ein Mittel zum Erzeugen eines Prüfberichts, der anzeigt, welche der Zeilen und Verzweigungen der Computersoftware nicht genommen wurden.

2. Vorrichtung nach Anspruch 1, weiterhin mit einem Mittel zum Speichern einer aktuellen Adresse einer aktuellen Zeile der Computersoftware und einer vorherigen Adresse einer vorherigen Zeile der Computersoftware, wobei die Computersoftware dieselbe Computersoftware ist, die nach der Validierung und Verifikation ohne Instrumentation mit anderer Software verwendet wird.

3. Vorrichtung zur automatisierten Validierung und Verifikation von Computer-Ausführungsweg- und Entscheidungswegsoftware nach Anspruch 1 oder 2, wobei das Mittel zum Ausführen der Computersoftware eine Prüfinstallation ist.

4. Vorrichtung zur automatisierten Validierung und Verifikation des Ausführungswegs und Entscheidungswegs von Computersoftware nach Anspruch 1, 2 oder 3, weiterhin mit einem Mittel zum Berücksichtigen asynchroner Interrupts während der Ausführung der kompilierten Computersoftware.

5. Vorrichtung nach Anspruch 1, 2, 3 oder 4, wobei die Validierung und Verifikation der Computersoftware während der anforderungsbezogenen Prüfung durchgeführt wird.

6. Vorrichtung nach einem der vorhergehenden Ansprüche, wobei die Validierung und Verifikation des Ausführungswegs und Entscheidungswegs der Computersoftware auf der Maschinencode-Ausführungsebene durchgeführt wird.

7. Vorrichtung nach einem der vorhergehenden Ansprüche, wobei die Validierung und Verifikation des Ausführungswegs und Entscheidungswegs des Computers auf der Maschinencode-Ausführungsebene durchgeführt wird.

8. Vorrichtung nach einem der vorhergehenden Ansprüche, wobei das Mittel zum Vergleichen der Link-Abbildung mit dem ersten und dem zweiten Feld die Nachverarbeitung der Link-Abbildung und des ersten und des zweiten Felds vergleicht, um eine Analyse der Methode bereitzustellen, mit der die Computersoftware ausgeführt wurde.

9. Vorrichtung nach einem der vorhergehenden Ansprüche, wobei die Validierung und Verifikation des Ausführungswegs und Entscheidungswegs der Computersoftware durchgeführt wird, während die Computersoftware in das Mittel zum Ausführen der kompilierten Software eingebettet ist.

10. Vorrichtung nach Anspruch 9, wobei das Mittel zum Ausführen der kompilierten Software ein Avionikprozessor ist.

11. Verfahren zur automatisierten Validierung und Verifikation des Ausführungswegs und Entscheidungswegs von Computersoftware, mit den folgenden Schritten:
Kompilieren der Computersoftware und Erzeugen einer Link-Abbildung, wobei die Link-Abbildung eine Auflistung aller Codezeilen in der Computersoftware sowie der Links für alle Verzweigungen, die Teil der Computersoftware sind, enthält;
Ausführen der Computersoftware in einem Prozessor, so daß alle Funktionen der Computersoftware ausgeführt werden;
Überwachen der Ausführung der Computersoftware in dem Prozessor von allem Zeilen-if-Code in der Computersoftware und Erzeugen einer Ausführungsaufzeichnungsabbildung mit einem ersten und einem zweiten Feld, wobei das erste Feld einen Anzeiger aller Befehlsadressen in der Computersoftware enthält, an denen eine Verzweigung nicht genommen wird, und das zweite Feld einen Anzeiger aller Befehlsadressen in der Computersoftware enthält, an denen eine Verzweigung genommen wird;
Vergleichen der Link-Abbildung mit dem ersten und dem zweiten Feld der Ausführungsaufzeichnungsabbildung, um zu bestimmen, daß alle Zeilen in der Computersoftware ausgeführt werden, und um bestimmte Zeilen und Verzweigungen der Computersoftware zu identifizieren, die nicht ausgeführt wurden; und
Erzeugen eines Prüfabdeckungsberichts, der alle Zeilen und Verzweigungen der Computersoftware auflistet, die nicht ausgeführt wurden.

12. Verfahren nach Anspruch 11, wobei der Prüfabdeckungsbericht weiterhin eine Bewertung der Prüfabdeckung potentieller Ausführungswege und Entscheidungsausführungswege bereitstellt;
wobei die Schritte des Ausführens und Überwachens den Schritt des Vergleichens der aktuellen Adresse einer aktuellen Zeile der Computersoftware, die ausgeführt wird, mit der vorherigen Adresse einer vorherigen Zeile der Computersoftware, die ausgeführt wurde, umfassen, und wenn der aktuelle Befehl um mehr als eine Adresse größer oder kleiner als die vorherige Adresse ist, das Verzweigung-Genommen-Feld mit dem Anzeiger ausgefüllt wird, und wenn die aktuelle Adresse um nicht mehr als Eins größer als die vorherige Adresse ist, das Verzweigung-Nicht-Genommen-Feld mit dem Anzeiger ausgefüllt wird; und
wobei der Schritt des Vergleichens der Link-Abbildung mit der Ausführungsaufzeichnungsabbildung das Bestimmen umfaßt, ob jede der Adressen in der Link-Abbildung ein Verzweigungsbefehl ist oder nicht, und wenn sie es ist, bestimmt wird, daß der Verzweigungsbefehl sowohl den Verzweigung-Genommen- als auch den Verzweigung-Nicht-Genommen-Anzeiger aufweist, und wenn die Adresse kein Verzweigungsbefehl ist, bestimmt wird, daß die Ausführungsaufzeichnungsabbildung den Verzweigung-Nicht-Genommen-Anzeiger enthält.

13. Verfahren nach Anspruch 11, wobei die Computersoftware, die validiert und verifiziert wird, dieselbe Computersoftware ist, die nach der Validierung und Verifikation ohne Instrumentation mit anderer Software verwendet wird, und weiterhin mit dem Schritt des Speicherns einer aktuellen Adresszeile der Computersoftware, die in dem Prozessor ausgeführt wird, und einer vorherigen Adresse einer vorherigen Zeile der Computersoftware, die in dem Prozeß ausgeführt wird.

## Revendications

1. Dispositif pour la validation et la vérification automatiques du chemin d'exécution et du chemin de décision d'un logiciel d'ordinateur, le dispositif comprenant:
un moyen pour compiler le logiciel d'ordinateur;
un moyen pour générer une carte des liens pour le logiciel d'ordinateur, ladite carte des liens comprenant une liste de toutes les lignes de code dans le logiciel d'ordinateur ainsi que les liens pour tous les branchements qui font partie du logiciel d'ordinateur;
un processeur pour exécuter le logiciel d'ordinateur compilé de telle sorte que toutes les fonctions du logiciel d'ordinateur soient exécutées;
un moyen pour comparer la carte des liens avec les premier et deuxième champs de la carte d'enregistrement d'exécution, de manière à déterminer si toutes les lignes de code dans le logiciel d'ordinateur ont été exécutées, et si tous les branchements dans le logiciel d'ordinateur ont été pris au moins une fois et n'ont pas été pris au moins une fois;
un moyen pour surveiller l'exécution du logiciel d'ordinateur s'exécutant à l'intérieur du processeur, et pour créer une carte d'enregistrement d'exécution avec des premier et deuxième champs, dans lesquels le premier champ contient un indicateur de toutes les adresses d'instructions dans le logiciel d'ordinateur dans lesquelles un branchement n'est pas pris, et le deuxième champ contient un indicateur de toutes les adresses d'instructions dans le logiciel d'ordinateur dans lesquelles un branchement est pris; et
un moyen pour produire un rapport de test qui indique quelles lignes et quels branchements du logiciel d'ordinateur n'ont pas été pris.

2. Dispositif selon la revendication 1, comprenant en outre un moyen pour stocker une adresse en cours d'une ligne en cours du logiciel d'ordinateur et une adresse précédente d'une ligne précédente du logiciel d'ordinateur, le logiciel d'ordinateur étant le même logiciel d'ordinateur que celui utilisé après la validation et la vérification, sans avoir été équipé d'un autre logiciel.

3. Dispositif pour la validation et la vérification automatisées du chemin d'exécution et du chemin de décision d'un logiciel d'ordinateur selon la revendication 1 ou 2, dans lequel le moyen pour exécuter le logiciel d'ordinateur est un montage de test.

4. Dispositif pour la validation et la vérification automatisées du chemin d'exécution et du chemin de décision d'un logiciel d'ordinateur selon la revendication 1, 2 ou 3, comprenant en outre un moyen pour rendre compte d'interruptions asynchrones durant l'exécution du logiciel d'ordinateur compilé.

5. Dispositif selon la revendication 1, 2, 3 ou 4,
dans lequel la validation et la vérification du logiciel d'ordinateur sont réalisées durant des tests basés sur certaines exigences.

6. Dispositif selon l'une quelconque des revendications précédentes, dans lequel la validation et la vérification du chemin d'exécution et du chemin de décision du logiciel d'ordinateur sont effectuées au niveau d'exécution de code de la machine.

7. Dispositif selon l'une quelconque des revendications précédentes, dans lequel la validation et la vérification du chemin d'exécution et du chemin de décision de l'ordinateur sont effectuées au niveau d'exécution de code de la machine.

8. Dispositif selon l'une quelconque des revendications précédentes, dans lequel les moyens pour comparer la carte des liens avec les premier et deuxième champs comparent la carte des liens et les premier et deuxième champs après le traitement par le processeur de manière à fournir une analyse du procédé avec lequel le logiciel d'ordinateur a été exécuté.

9. Dispositif selon l'une quelconque des revendications précédentes, dans lequel la validation et la vérification du chemin d'exécution et du chemin de décision du logiciel d'ordinateur sont effectuées alors que le logiciel d'ordinateur est intégré dans le moyen pour exécuter le logiciel compilé.

10. Dispositif selon la revendication 9, dans lequel le moyen pour exécuter le logiciel compilé est un processeur d'avionique.

11. Procédé pour la validation et la vérification automatisées du chemin d'exécution et du chemin de décision d'un logiciel d'ordinateur, comprenant les étapes suivantes:
compilation du logiciel d'ordinateur et création d'une carte des liens, ladite carte des liens comprenant une liste de toutes les lignes de code dans le logiciel d'ordinateur ainsi que les liens pour tout les branchements qui font partie du logiciel d'ordinateur;
exécution du logiciel d'ordinateur dans un processeur, de telle sorte que toutes les fonctions du logiciel d'ordinateur soient exécutées;
surveillance de l'exécution du logiciel d'ordinateur dans le processeur de toutes les lignes de code dans le logiciel d'ordinateur, et création d'une carte d'enregistrement d'exécution avec des premier et deuxième champs, le premier champ contenant un indicateur de toutes les adresses d'instructions dans le logiciel d'ordinateur dans lesquelles un branchement n'est pas pris, et le deuxième champ contenant un indicateur de toutes les adresses d'instructions dans le logiciel d'ordinateur dans lesquelles un branchement est pris;
comparaison de la carte des liens avec les premier et deuxième champs de la carte d'enregistrement d'exécution, de manière à déterminer si toutes les lignes du logiciel d'ordinateur sont exécutées et à identifier les lignes et les branchements particuliers du logiciel d'ordinateur qui n'ont pas été exécutés; et
production d'un rapport de couverture de test qui établit une liste de toutes les lignes et de toutes les branchements du logiciel d'ordinateur qui n'ont pas été exécutés.

12. Procédé selon la revendication 11, dans lequel le rapport de couverture de test fournit en outre une évaluation de la couverture de test de chemins d'exécution potentiels et de chemins d'exécution de décision potentiels;
dans lequel les étapes d'exécution et de surveillance comprennent l'étape de comparaison de l'adresse en cours d'une ligne en cours du logiciel d'ordinateur qui est en cours d'exécution avec l'adresse précédente d'une ligne précédente du logiciel d'ordinateur qui a été exécutée, et si l'instruction active est supérieure ou inférieure de plus d'une adresse par rapport à l'adresse précédente, le champ de branchement pris est rempli par l'indicateur, et si l'adresse en cours n'est pas supérieure de plus d'une adresse par rapport à l'adresse précédente, le champ de branchement non pris est rempli par l'indicateur; et
dans lequel l'étape de comparaison de la carte des liens avec la carte d'enregistrement d'exécution comprend le fait de déterminer si chacune des adresses dans la carte des liens est ou n'est pas une instruction de branchement, et si c'est le cas, de déterminer que l'instruction de branchement comporte à la fois l'indicateur de branchement pris et l'indicateur de branchement non pris, et si l'adresse n'est pas une instruction de branchement, de déterminer que la carte d'enregistrement d'exécution contient l'indicateur de branchement non pris.

13. Procédé selon la revendication 11, dans lequel le logiciel d'ordinateur en cours de validation et de vérification est le même logiciel d'ordinateur que celui utilisé après la validation et la vérification, sans avoir été équipé d'un autre logiciel, et comprenant en outre l'étape de stockage d'une ligne d'adresse en cours du logiciel d'ordinateur qui est en cours d'exécution dans le processeur et d'une adresse précédente d'une ligne précédente du logiciel d'ordinateur en cours d'exécution dans le processeur.
